# EUROPÄISCHE PATENTANMELDUNG

(11) **EP 1 902 984 A1**
(43) Veröffentlichungstag der Anmeldung: **26.03.2008**
(21) Anmeldenummer: 07017449.5
(22) Anmeldetag: 06.09.2007
(51) Int. Cl.: B65G 67/42

(54) **Verfahren zum Entleeren von Waggons mit Hilfe eines Seitenhochkippers und Seitenhochkipper**

(30) Priorität: 23.09.2006 DE 102006044976
(71) Anmelder: ThyssenKrupp Fördertechnik GmbH, 45143 Essen (DE)
(72) Erfinder: Nuengsri, Suthat, 66386 St. Ingbert (DE)
(74) Vertreter: Dahlkamp, Heinrich-Leo

(57) **Zusammenfassung**

Die Erfindung bezieht sich auf ein Verfahren zum Entleeren von Materialien aus einem Waggon (1) mit Hilfe eines Seitenhochkippers, wobei der auf einem Kipprahmen (5) angeordnete Waggon (1) in besonderer Weise in zwei Stufen um jeweils waagerechte Schwenkachsen (D1, D2, D21, D22) geschwenkt wird und der Seitenhochkipper einen c-förmig ausgebildeten Kipprahmen (5) besitzt, der an einem Zwischenstück (6) schwenkbar gelagert ist, das selbst wiederum schwenkbar am Fundament (9) gelagert ist.

## Beschreibung

Die Erfindung bezieht sich auf ein Verfahren zum Entleeren von Materialen, vorzugsweise Schüttgut aus oben offenen Waggons mit Hilfe eines Seitenhochkippers gemäß Oberbegriff des Anspruches 1 und einen Seitenhochkipper, insbesondere zur Durchführung des Verfahrens.

Aus der US-A-4,134,503 ist eine gattungsgemäße Vorrichtung zum Entladen von oben offenen Fahrzeugen, insbesondere Eisenbahnwaggons ersichtlich, wobei der mit Material gefüllte Waggon in eine U-förmige oben offene Aufnahmevorrichtung gefahren wird, die zum Entleeren in den seitlich daneben angeordneten Bunker in zwei Stufen mit Hilfe von jeweils vier Hydraulikzylindern angehoben und geschwenkt wird. Die Vorrichtung ist dabei so ausgebildet, dass die gesamte Einrichtung bis weit über den oberen Schwenkpunkt angehoben werden muss. Dazu wird in einem ersten Schritt mit einem sehr langen Hydraulikzylinder ein am Fundament befestigtes Zwischenstück, an dem die Kippvorrichtung befestigt ist, soweit angehoben, bis der Waggon in einer oberen nahezu um 90° geschwenkten Position angekommen ist. Anschließend wird mit einem am Zwischenstück angeordneten zweiten Zylinder die Kippvorrichtung bis in die Endstellung geschwenkt. Bei dieser zum Stand der Technik gehörigen Kippvorrichtung muss die gesamte Vorrichtung mit dem darin befindlichen gefüllten Waggon in aufwändiger Weise sehr hoch gehoben werden, um über den oberen Schwenkpunkt zu kommen. Außerdem ist zur Vermeidung von Torsionskräften an dem Zwischenstück eine hohe Anzahl von Zylindern angebracht. Insbesondere ist aber durch die U-förmige Aufnahmevorrichtung die seitliche Zugänglichkeit zum Waggon und dessen Längsantrieb mittels z.B. eines Seitenarmzieher zum Einbringen des Waggons in die Vorrichtung verwehrt. Außerdem ist der U-Rahmen schwer und verlangt dadurch hohe Schwenkkräfte, -momente und -leistung.

In der FR 2470 745 A1 ist eine ähnliche Vorrichtung beschrieben, bei der der Kipprahmen und das Zwischenstück zweistufig mit Hilfe von Zylindern hydraulisch um ein und dieselbe waagerechte Achse geschwenkt wird und das Zwischenstück zwei zueinander nicht bewegliche Arme besitzt, an deren Enden jeweils einer der beiden Zylinder angreift. Auch hierbei muss der gesamte Kipprahmen über die hochgelegene Drehachse gehoben werden.

Der Erfindung liegt die Aufgabe zu Grunde, ein gattungsgemäßes Verfahren und eine Vorrichtung vorzugschlagen, bei der die zum Stand der Technik gehörigen Probleme nicht bestehen und ein einfacheres Verfahren zum Entleeren des Waggons und eine kostengünstige Konstruktion des Seitenhochkippers erreicht wird.

Die Lösung dieser Aufgabe ist in den Ansprüchen 1 und 6 wiedergegeben. Die Unteransprüche 2 bis 5 und 7 bis 15 enthalten sinnvolle ergänzende Maßnahmen und Ausführungsformen dazu.

Das erfindungsgemäße Verfahren zeichnet sich dadurch aus, dass in einem ersten Schritt nur der Kipprahmen und nicht bereits der gesamte Seitenhochkipper mit dem am Fundament befestigten Zwischenstück betätigt wird. Der Kipprahmen mit dem gefüllten Waggon wird dabei mit Hilfe des am Zwischenstück abgestützten Zylinders um die waagerechte Schwenkachse geschwenkt und nur bis auf eine relativ geringe Höhe angehoben, wobei der Waggon auch zumindest teilweise in einer Position zwischen den außerhalb der Längserstreckung des Waggons angeordneten Querträgern des Zwischenstückes verbleibt. Im zweiten Schritt wird der zwischen Fundament und dem Zwischenstück angeordnete zweite Zylinder betätigt, wobei der gesamte Seitenhochkipper um die zweite waagerecht angeordnete Schwenkachse bis in die Endstellung geschwenkt wird. Dadurch, dass die Angriffspunkte der zweiten Schwenkachse außerhalb der Waggonlänge angeordnet sind, kann erfindungsgemäß während des größten Teiles des Schwenkvorganges diese Schwenkachse immer wesentlich oberhalb der seitlichen Außenkante des Waggons und damit innerhalb dessen Lichtraumprofiles gehalten werden. Das Zwischenstück und insbesondere auch der Waggon selbst müssen also nicht wie bei der Vorrichtung nach der US-A-4,134,503 über diesen Schwenkpunkt angehoben werden. Dadurch kann erheblich Konstruktionsmasse und Energie eingespart werden. Von besonderer Bedeutung ist bei dem erfindungsgemäßen Verfahren, dass bereits bei dem ersten Schwenkvorgang der Schwerpunkt des Waggons sehr nahe an die zweite Schwenkachse herangebracht wird und der Kraftaufwand für den zweiten Schwenkvorgang gering gehalten werden kann.

Erfindungsgemäß erfolgt der erste Schwenkvorgang um einen Winkel α von 40° bis 60°, vorzugsweise bis ca. 55° und der zweite Schwenkvorgang dann bis zu einer Endstellung von mindestens 145°.
Die Plattform, auf die der Waggon gefahren wird, kann insbesondere mit einer waagerechten Schwenkachse auf dem Kipprahmen gelagert sein, wobei vorzugsweise die Schwenkachse gegenüber dem Schwerpunkt des Waggons versetzt angeordnet ist. Durch diese insbesondere versetzt angeordnete Schwenkachse wird erreicht, dass beim ersten Schwenkvorgang der Waggon seitlich kippt und an mindestens einem Anschlag am Kipprahmen zur Anlage kommt und dort während des gesamten weiteren Schwenk- und Entladevorganges anliegt. Bei der Vorrichtung gemäß US-A-4,134,503 ist der Waggon auf einer Plattform angeordnet, die mit Hilfe einer eigenen Antriebsvorrichtung in Waggonquerrichtung verschoben wird. Bei der erfindungsgemäßen Kippvorrichtung kann auf diese zusätzliche Antriebsvorrichtung zum seitlichen Verschieben verzichtet werden.

Zur Fixierung des Waggons in dem Kipprahmen ist weiterhin vorgesehen, dass am Kipprahmen befestigte Haltevorrichtungen während des ersten Schwenkvorganges auf die dem Bunker zu- bzw. abgewandten Oberkanten der Seitenwand des Waggons abgesenkt werden, kurz nachdem der Waggon seitlich gekippt und an dem Anschlag am Kipprahmen zur Anlage gekommen ist. Es hat sich ebenfalls als vorteilhaft erwiesen, bereits beim zweiten Schwenkvorgang die Klemmkraft der Haltevorrichtungen etwa um das Eigengewicht des Waggons zu entlasten. Dadurch wird die Haltekraft für die Haltevorrichtung wesentlich verringert.

Der erfindungsgemäße Seitenhochkipper besitzt gemäß Kennzeichen des Anpruches 6 insbesondere einen C-förmig ausgebildeten Kipprahmen mit mindestens einem sich quer bis unter die Plattform erstreckenden unteren Schenkel und mindestens einem an der dem Bunker zugewandten Seite des Waggons sich erstreckenden seitlichen Schenkel sowie mindestens einem die Schenkel verbindenden, sich in Waggonlängsrichtung erstreckenden Längsträger. Das besondere an diesem C-förmigen Kipprahmen ist, dass die dem Bunker abgewandte Seite des Waggons vollständig frei bleibt und ein ausreichender Bewegungs- und Angreifraum für den Seitenarmzieher zum Ein- und Ausschieben des Waggons verbleibt.

Es hat sich als günstig erwiesen, je eine Haltevorrichtung für den Waggon auf beiden Längsseiten des Waggons anzuordnen. Jede Haltevorrichtung erstreckt sich mit einem Längsbalken über die gesamte Länge der Seitenwände des Waggons. Für den freien Materialfluß werden die beiden Querbalken der Haltevorrichtung außerhalb der Waggonstirnwände angeordnet.

Das am Fundament schwenkbeweglich angeordnete Zwischenstück besitzt stirnseitig außerhalb der Längserstreckung des Waggons äußere Querträger, deren Zapfenlagerungen bei allen Neigungswinkeln des Waggons ab 45° immer oberhalb der dem Bunker zugewandten Außenkante des Waggons und innerhalb dessen Lichtraumprofils angeordnet sind, sodass der Waggon zumindest großenteils zwischen diesen beiden Zapfenlagerungen geschwenkt und auf den Bunker zubewegt werden kann. Der besondere Vorteil dieser außen angeordneten Querträger liegt darin, dass insbesondere der Waggon nicht über die am Fundament gelagerte Schwenkachse hinaus angehoben werden muss und zumindest die dem Bunker zugewandte Außenkante des Waggons unterhalb dieser Schwenkachse verbleibt. Von Vorteil ist dabei auch, wenn die Schwenkachse des Kipprahmens unterhalb der Schwenkachse des Zwischenstückes verläuft.

Schließlich hat es sich auch als günstig erwiesen, die Querträger des Zwischenstückes, die zu den beiden Schwenkachsen führen, jeweils getrennt am Längsträger des Zwischenstückes zu befestigen.

Die Erfindung wird anhand der beigefügten Figuren 1 bis 4 beispielsweise näher erläutert. Es zeigen
- Fig. 1: eine Seitenansicht des erfindungsgemäßen Seitenhochkippers,
- Fig. 2: einen Querschnitt zu Fig. 1 nach der Linie I-I von Fig. 1 mit dem in den Seitenhochkipper eingefahrenen Waggon 1 vor dem ersten Schwenkvorgang,
- Fig. 3: einen Querschnitt entsprechend Fig. 2 nach dem ersten Schwenkvorgang und
- Fig. 4: einen Querschnitt entsprechend den Fig. 2 und 3 in der Endstellung nach zusätzlicher Betätigung des Zylinders 12.

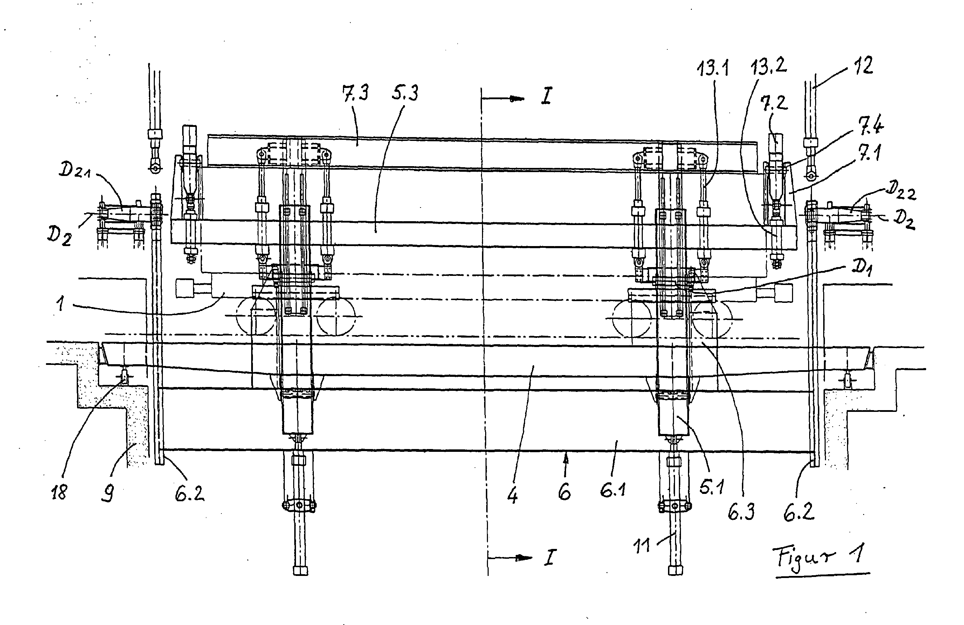

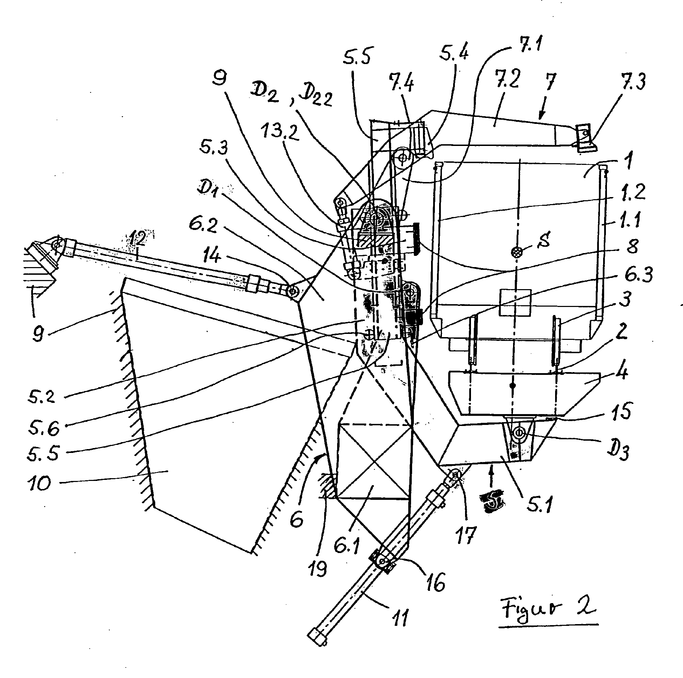

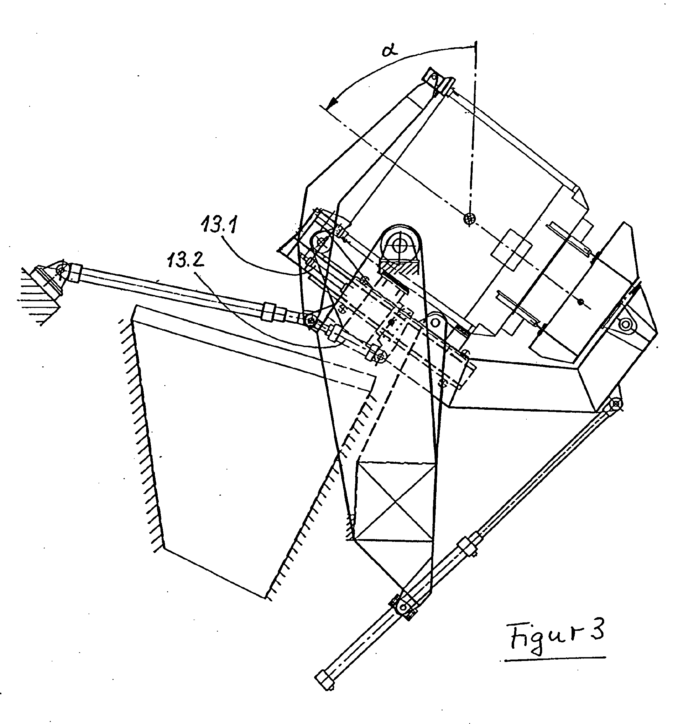

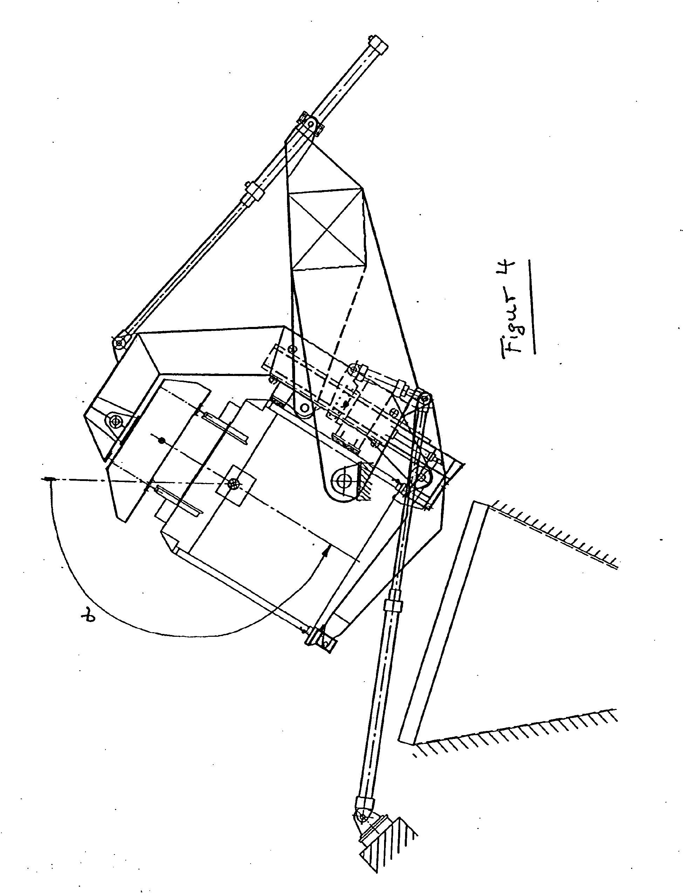

In den Figuren ist der Waggon 1 jeweils mit seinen Außenkonturen und den Rädern 3 auf den Schienen 2 auf der Plattform 4 dargestellt. Die Plattform 4 ist mit der waagerechten Schwenkachse D3 auf dem unteren Schenkel 5.1 des Kipprahmens 5 schwenkbar gelagert, sodass der Waggon 1 während des Anhebens und Schwenkens, wie aus der Fig. 3 ersichtlich ist, geringfügig seitlich abgekippt und an den Anschlägen 8 zur Anlage kommt.

Der Kipprahmen 5 ist C-förmig ausgebildet und besitzt neben dem unteren Schenkel 5.1 einen seitlichen Schenkel 5.2. Die beiden in Waggonquerrichtung sich erstreckenden C-Rahmen sind über mindestens einen Längsrahmen 5.3 fest miteinander verbunden. Der Kipprahmen 5 ist über die Schwenkachse D1 gelenkig mit dem Zwischenstück 6 verbunden, das wiederum über die waagerechte Schwenkachse D2 gelenkig am Fundament 9 gelagert ist. Der Kipprahmen 5 wird in der ersten Schwenkbewegung mit Hilfe des Zylinders 11, der mit dem Gelenk 16 am Ende des Zwischenstückes 6 und mit dem Gelenk 17 am Kipprahmen 5 angreift, angehoben und geschwenkt bis er in die in Fig. 3 dargestellte Stellung gelangt. Während dieses ersten Schwenk- und Hebevorganges wird der Waggon 1 um die Schwenkachse D3 nach links gekippt bis er an den Anschlägen 8 zur Anlage kommt. Dann wird außerdem der Haltebalken 7.3 der Haltevorrichtung 7 mit Hilfe der Zylinder 13.2 auf die Oberkante der dem Bunker abgewandten Seitenwand 1.1 des Waggons abgesenkt. Diese Haltevorrichtung 7 besteht aus den beiden Zylindern 13.2, den Lagerböcken 7.1 mit der Lagerung 7.4, zwei Querbalken 7.2 und einem Haltebalken 7.3 am Ende der Querbalken 7.2. Außerdem wird gleichzeitig mit dem Absenken von Haltebalken 7.3 auch der Haltebalken 5.4 der zwischen den Führungsrollen 5.6 geführten teleskopierbaren Haltevorrichtung 5.5 mit Hilfe der beiden Teleskopierzylinder 13.1 auf die Oberkante der dem Bunker zugewandten Seitenwand 1.2 des Waggons abgesenkt. Sobald der Zylinder 11 seine Endposition erreicht hat, wird der auf der einen Seite gelenkig am Fundament 9 befestigte Zylinder 12 betätigt. Er greift am Gelenk 14 am Zwischenstück 6 an und bewegt das Zwischenstück 6 gemeinsam mit dem Kipprahmen 5 und dem Waggon 1 um die Schwenkachse D2 bis in die in Fig. 4 dargestellte Endstellung. Der Neigungswinkel α des Waggons 1 mit dem Schwerpunkt S gegenüber der Senkrechten ist nach der ersten Schwenkung ca. 55° (vgl. Fig. 3) und in der Endstellung 145° (vgl. Fig. 4).

Wie insbesondere aus Fig. 1 ersichtlich ist, besteht das Zwischenstück 6 aus einem sich in Waggonlängsrichtung erstreckenden Längsträger 6.1, zwei an dessen Enden außerhalb des Waggons angeordneten Querträgern 6.2 und zwei weiteren innerhalb der Waggonlänge angeordneten Querträgern 6.3. Die Enden der Querträger 6.2 sind mit den Schwenkachsen D2 bzw. den Zapfenlagerungen D21 und D22 am Fundament 9 gelagert, während die Enden der Querträger 6.3 über die Schwenkachse D1 mit dem seitlichen Schenkel 5.2 des Kipprahmens 5 verbunden sind. Das Zwischenstück 6 bzw. dessen Längsträger 6.1 kommt in der unteren Stellung an dem festen Anschlag 19 zur Anlage. Nach dem Einfahren des Waggons 1 mit Hilfe eines nicht dargestellten Seitenarmvorziehers liegt die Plattform 4 jeweils an ihren Enden auf den Punkten 18 auf dem Fundament 9 auf.

### Bezugszeichenliste:

- 1: Waggon
- 1.1: äußere Seitenwand von 1
- 1.2: innere Seitenwand von 1
- 2: Schienen auf 4
- 3: Räder von 1
- 4: Plattform
- 5: Kipprahmen
- 5.1: unterer Schenkel von 5
- 5.2: seitlicher Schenkel von 5
- 5.3: Längsträger von 5
- 5.4: Haltebalken an 5.5 für 1.2
- 5.5: Teleskopierbare Haltevorrichtung an 5 für 5.4
- 5.6: Führungsrollen für 5.5
- 6: Zwischenstück
- 6.1: Längsträger von 6
- 6.2: Äußerer Querträger von 6
- 6.3: Innerer Querträger von 6
- 7: Haltevorrichtung für 1.1 an 5
- 7.1: Lagerbock an 5.3 für 7
- 7.2: Querbalken von 7
- 7.3: Haltebalken an 7 für 1.1
- 7.4: Lagerung von 7.2 an 7.1
- 8: Anschlag an 5 für 1
- 9: Fundament
- 10: Bunker
- 11: Zylinder zwischen 6 und 5
- 12: Zylinder zwischen 9 und 6
- 13.1: Teleskopierzylinder für 5.5 an 5.2/5.3
- 13.2: Zylinder zwischen 7.2 und 5 zum Kippen von 7.2
- 14: Gelenk für 12 an 6
- 15: Auflage für 4 auf 5
- 16: Gelenk von 11 an 6
- 17: Gelenk von 11 an 5
- 18: Auflagen von 4 auf 9
- 19: Anschlag für 6
- D1: Schwenkachse für 5 an 6
- D2: Schwenkachse für 6 (fest an 9)
- D3: Schwenkachse für 4 an 5
- D21: Zapfenlagerung an 6.2 mit D2
- D22: Zapfenlagerung an 6.2 mit D2
- α: Neigungswinkel von 1
- S: Schwerpunkt von 1

## Patentansprüche

1. Verfahren zum Entleeren von Materialien, vorzugsweise Schüttgut, aus oben offenen Waggons (1) mit Hilfe eines Seitenhochkippers, wobei
a) der Waggon (1) auf eine auf einem Kipprahmen (5) angeordnete Plattform (4) verfahren wird,
b) der Kipprahmen (5) mit der Plattform (4) und dem Waggon (1) zur Entleerung in einen neben dem Seitenhochkipper angeordneten Bunker (10) mindestens zweistufig mit Hilfe von Zylindern (11, 12) angehoben und um mindestens eine horizontal und parallel zur Fahrtrichtung des Waggons (1) verlaufende Längsachse geschwenkt wird, indem
c) ein schwenkbar am Fundament (9) und an dem Kipprahmen (5) befestigtes Zwischenstück (6) von einem Zylinder (12) um eine waagerechte, am Fundament (9) fixierte Schwenkachse (D2) geschwenkt wird,
d) der Kipprahmen (5) von einem schwenkbar am Zwischenstück (6) befestigten Zylinder (11) um eine waagerechte Schwenkachse (D1) relativ zum Zwischenstück (6) geschwenkt wird und
e) der Kipprahmen (5) mit dem darauf angeordneten Waggon (1) mit Hilfe des am Zwischenstück (6) angelenkten Zylinders (11) um die Schwenkachse (D1) gegenüber dem Zwischenstück (6) geschwenkt wird,
**dadurch gekennzeichnet, dass**
f) das Lichtraumprofil des Waggons (1) bis in eine Position zwischen die außerhalb des Waggons (1) angeordneten Zapfenlagerungen (D21, D22) der Schwenkachse (D2) der Querträger (6.2) des Zwischenstückes (6) geschwenkt und
g) das Zwischenstück (6) mit dem Kipprahmen (5) mit Hilfe des am Fundament (9) angelenkten Zylinders (12) um die Schwenkachse (D2) bis in die Endstellung geschwenkt wird, wobei die Schwenkachse (D2) der außerhalb der Waggonlänge angeordneten Zapfenlagerungen (D21, D22) auch während dieses Schwenkvorganges bis zur Endstellung immer wesentlich innerhalb des Lichtraumprofiles des Waggons (1) gehalten wird.

2. Verfahren nach Anspruch 1, **dadurch gekennzeichnet, dass** die erste Schwenkbewegung um die Schwenkachse (D1) um einen Winkel α von 40° bis 60° und die zweite Schwenkbewegung bis zu einer Endstellung von mindestens 145° erfolgt.

3. Verfahren nach Anspruch 1, **dadurch gekennzeichnet, dass** die Plattform (4) mit einer waagerechten Schwenkachse (D3) auf dem Kipprahmen (5) gelagert ist und dass spätestens beim ersten Schwenkvorgang der Waggon (1) seitlich kippt und an mindestens einem Anschlag (8) am Kipprahmen (5) zur Anlage kommt.

4. Verfahren nach Anspruch 1, **dadurch gekennzeichnet, dass** mindestens eine am Kipprahmen (5) befestigte Haltevorrichtung (5.5, 7) während des ersten Schwenkvorganges auf die Oberkanten der dem Bunker (10 zu und abgewandten Seitenwand (1.1, 1.2) des Waggons (1) abgesenkt wird.

5. Verfahren nach Anspruch 4, **dadurch gekennzeichnet, dass** beim zweiten Schwenkvorgang die Klemmkraft der Haltevorrichtung (5.5, 7) um die Gewichtskraft des Waggons (1) entlastet wird.

6. Seitenhochkipper für Waggons (1), zur Durchführung des Verfahrens nach den vorhergehenden Ansprüchen mit einer von den Waggons (1) zu befahrenden Plattform (4), die auf einem Schenkel (5.1) eines Kipprahmens (5) gelagert ist, wobei der Kipprahmen (5) mit der Plattform (4) und dem Waggon (1) mindestens zweistufig mit Hilfe von Zylindern (11, 12) hydraulisch um waagerechte Schwenkachsen (D1, D2) zur Entleerung des Waggons (1) in einen neben dem Seitenhochkipper angeordneten Bunker (10) angehoben und geschwenkt werden kann, der Kipprahmen (5) über eine waagerechte Schwenkachse (D1) an einem Zwischenstück (6) schwenkbeweglich befestigt ist, das Zwischenstück (6) selbst über eine ebenfalls waagerechte Schwenkachse (D2) schwenkbeweglich am Fundament (9) befestigt ist, mindestens ein am Fundament (9) gelagerter Zylinder (12) mit dem Zwischenstück (6) und mindestens ein weiterer am Zwischenstück (6) gelagerter Zylinder (11) mit dem Kipprahmen (5) verbunden ist, **dadurch gekennzeichnet, dass** zwei C-förmig ausgebildete Kipprahmen (5) mit jeweils mindestens einem sich quer bis auf die Plattform (4) erstreckenden unteren Schenkel (5.1) und mindestens einem an der dem Bunker (10) zugewandten Seite des Waggons (1) sich erstreckenden seitlichen Schenkel (5.2) und mindestens ein die Kipprahmen (5) verbindender Längsträger (5.3) vorgesehen sind.

7. Seitenhochkipper nach Anspruch 6, **dadurch gekennzeichnet, dass** die Plattform (4) um eine waagerechte, in Waggonlängsrichtung sich erstreckende Schwenkachse (D3) gegenüber dem unteren Schenkel (5.1) schwenkbeweglich ist.

8. Seitenhochkipper nach Anspruch 6, **dadurch gekennzeichnet, dass** der Schwerpunkt (S) des Waggons (1) gegenüber der Schwenkachse (D3) zum seitlichen Schenkel (5.2) hin versetzt ist.

9. Seitenhochkipper nach Anspruch 6, **dadurch gekennzeichnet, dass** sowohl auf der dem Bunker (10) zu- als auch auf der ihm abgewandten Seitenwand (1.1, 1.2) des Waggons (1) jeweils eine auf die Oberkante der jeweiligen Seitenwand (1.1, 1.2) absenkbare Haltevorrichtung (5.5, 7) angeordnet ist.

10. Seitenhochkipper nach Anspruch 9, **dadurch gekennzeichnet, dass** die Haltevorrichtungen (5.5, 7) jeweils einen Haltebalken (5.4, 7.3) beinhalten, welcher sich über zumindest den größten Teil der Waggonlänge erstreckt und sich von oben auf die jeweilige Waggonseitenwand (1.1, 1.2) absenken lässt.

11. Seitenhochkipper nach Anspruch 10, **dadurch gekennzeichnet, dass** die Haltevorrichtung (5.5) teleskopierbar zwischen Führungselementen oder Rollen (5.6) angeordnet und mittels eines Teleskopierzylinders (13.1) in Höhenrichtung des Waggons bewegt und verspannt werden kann.

12. Seitenhochkipper nach Anspruch 10, **dadurch gekennzeichnet, dass** die Haltevorrichtung (7) in einer Lagerung (7.4) kippbar gelagert ist und mittels eines Zylinders (13.2) bewegt und verspannt werden kann.

13. Seitenhochkipper nach Anspruch 6, **dadurch gekennzeichnet, dass** die äußeren Querträger (6.2) des Zwischenstückes (6) stirnseitig außerhalb der Längenerstreckung des Waggons (1) über die Zapfenlagerungen (D21, D22) der Schwenkachse (D2) schwenkbar am Fundament (9) gelagert sind.

14. Seitenhochkipper nach Anspruch 6, **dadurch gekennzeichnet, dass** die Schwenkachse (D2) des Zwischenstückes (6) bei einem Neigungswinkel α von mehr als 45° immer innerhalb des Lichtraumprofiles des Waggons (1) angeordnet ist.

15. Seitenhochkipper nach Anspruch 6, **dadurch gekennzeichnet, dass** die Schwenkachse (D1) des Kipprahmens (5) bis zu einem Neigungswinkel α von ca. 90° niedriger angeordnet ist als die Schwenkachse (D2) und auch niedriger als der Schwerpunkt (S) des beladenen Waggons (1).

16. Seitenhochkipper nach Anspruch 6, **dadurch gekennzeichnet, dass** die Querträger (6.2) und (6.3) des Zwischenstückes (6) jeweils getrennt am Längsträger (6.1) befestigt sind.
